## Europäisches Patentamt

## European Patent Office

## Office européen des brevets

(19)

(11) Veröffentlichungsnummer: **0 035 580**
**B1**

(12) **EUROPÄISCHE PATENTSCHRIFT**

(45) Veröffentlichungstag der Patentschrift:
02.10.85

(21) Anmeldenummer: 80101195.8

(22) Anmeldetag: 10.03.80

(51) Int. Cl.⁴: **G 05 D 3/20,** G 01 B 11/27,
H 01 L 21/68, G 05 B 19/18

(54) Interferometrisch gesteuerter Werktisch und Positionsregelschaltung.

<table>
<tr><td>(43) Veröffentlichungstag der Anmeldung:<br>16.09.81 Patentblatt 81/37</td><td>(73) Patentinhaber: EATON-OPTIMETRIX INC., 4001 North<br>First Street, San Jose California 95134 (US)</td></tr>
<tr><td>(45) Bekanntmachung des Hinweises auf die Patenterteilung:<br>02.10.85 Patentblatt 85/40</td><td>(72) Erfinder: Phillips, Edward H., P.O. Box 1042, Middletown<br>California 95461 (US)<br>Erfinder: Rauskolb, Rüdiger F., Drosselweg 3,<br>D-2080 Pinneberg (DE)</td></tr>
<tr><td>(84) Benannte Vertragsstaaten:<br>IT</td><td>(74) Vertreter: Liesegang, Roland, Dr.-Ing., Sckellstrasse 1,<br>D-8000 München 80 (DE)</td></tr>
<tr><td>(56) Entgegenhaltungen:<br>DE - A - 2 506 628<br>DE - A - 2 752 375<br>GB - A - 1 196 281<br>US - A - 3 458 259<br>US - A - 3 656 853<br>US - A - 4 019 109</td><td></td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Werktisch mit den Merkmalen des Oberbegriffs des Anspruchs 1. Beispielsweise dient ein solcher Werktisch dazu, nacheinander verschiedene Bereiche einer Photomaske oder eines Halbleiterplättchens bezüglich des gleichen Fadenkreuzes oder dessen Abbildes anzuordnen oder auszurichten.

In der Halbleiterindustrie werden interferometrisch gesteuerte X/Y-Werktische sowohl bei der Herstellung von Photomasken als auch bei der Bearbeitung von Halbleiterplättchen verwendet, um integrierte Schaltkreise und dergleichen herzustellen. Eine Photomaske mit hohem Auflösungsvermögen (im Submikronbereich) wird typischerweise hergestellt, indem ein derartiger interferometrisch gesteuerter Werktisch verwendet wird, um nacheinander verschiedene Bereiche der Photomaske bezüglich eines Fadenkreuzes oder eines Abbilds von diesem anzuordnen, wobei eine Schicht einer auf die Photomaske aufzudruckenden Mikroschaltung in jedem dieser Bereiche dargestellt wird. Durch diesen schrittweise wiederholten Druckvorgang wird eine Anordnung von aneinander angrenzenden Bereichen eines Mikroschaltkreises auf einem Niveau auf der Photomaske in Zeilen und Spalten parallel zu den X- und Y-Achsen der Bewegung der interferometrisch gesteuerten Stufe gebildet. Ein Satz solcher Photomasken, die jeweils eine Anordnung einer Mikroschaltung mit einer verschiedenen Höhenschicht bilden, wird typischerweise bei der Herstellung von integrierten Schaltungen oder dergleichen aus einem Halbleiterplättchen verwendet. Im Verlauf dieser Herstellung wird das Halbleiterplättchen nacheinander mit jeder Photomaske des Satzes ausgerichtet, und die Mikroschaltung einer auf die Photomaske aufgedruckten Schicht wird wiederum auf das Halbleiterplättchen aufgedruckt. Es ist jedoch auch möglich, die Herstellung eines Satzes solcher Photomasken zu vermeiden, indem ein interferometrisch geregelter Werktisch verwendet wird, um nacheinander verschiedene Bereiche des Halbleiterplättchens mit jedem der Fadenkreuze auszurichten, die bei der Herstellung des Satzes von Photomasken verwendet werden, so daß das Niveau der Mikroschaltung, das durch jedes dieser Fadenkreuze dargestellt wird, direkt auf das Halbleiterplättchen in jedem dieser Bereiche gedruckt wird während verschiedener Fortschalt- und Wiederholungs-Druckvorgänge.

Um die genaue Anordnung oder Ausrichtung einer Anordnung von aneinander grenzenden Bereichen eines Niveaus einer Mikroschaltung, die gerade auf eine Photomaske oder auf ein Halbleiterplättchen gedruckt wird, bezüglich jeder Anordnung aneinander grenzender Bereiche der Mikroschaltung eines anderen vorher gedruckten oder noch zu druckenden Niveaus auf den anderen Photomasken des gleichen Satzes oder bezüglich jeder Anordnung von aneinander grenzenden Bereichen der Mikroschaltung eines anderen vorher gedruckten oder noch auf dem Halbleiterplättchen zu druckenden Niveaus zu erleichtern, ist anzustreben, daß ein interferometrisch geregelter Werktisch verwendet wird, welche genau rechtwinklige X- und Y-Bewegungsachsen für Schritt- und Wiederholungsdruckvorgänge beispielsweise der vorgenannten Art hat. Leider haben die herkömmlichen interferometrisch geregelten Werktische keine genau rechtwinkligen X- und Y-Achsen der Bewegung. Darüber hinaus ist der Grad der Abweichung von der Rechtwinkligkeit der X- und Y-Bewegungsachsen solcher Werktische normalerweise von Werktisch zu Werktisch verschieden, so daß verschiedene Werktische verschiedene Referenzrahmen aufweisen und daher nicht austauschbar verwendet werden können zum Drucken verschiedener Niveaus der Mikroschaltung auf verschiedenen Photomasken des gleichen Satzes oder auf dem gleichen Halbleiterplättchen oder Stapel von Halbleiterplättchen.

Herkömmliche interferometrisch gesteuerte Werktische der im Oberbegriff des Anspruchs 1 angegebenen Art verwenden typischerweise ein getrenntes Interferometer-Meßsystem für jede Bewegungsachse. Dabei ist ein erster bewegbarer Spiegel des Interferometer-Meßsystems für die X-Achse der Bewegung auf dem Werktisch in einer vertikalen Ebene angeordnet, die senkrecht zur X-Achse der Bewegung steht, und ein zweiter bewegbarer Spiegel für die Y-Bewegungsachse ist auf dem Werktisch in einer vertikalen Ebene angeordnet, die senkrecht zur Y-Bewegungsachse steht (GB-A 1 196 281). Da diese Spiegel in genau zueinander rechtwinkligen vertikalen Ebenen angeordnet werden müssen, damit die Stufe zueinander genau rechtwinklige X- und Y-Bewegungsachsen hat, werden besondere Meßeinrichtungen und -verfahren mit hohem Aufwand und Kosten verwendet, um diese Spiegel in vertikalen Ebenen anzuordnen und zu halten, die soweit wie möglich zueinander rechtwinklig sind. Da jedoch selbst die beste Meßeinrichtung eine begrenzte Genauigkeit hat, ist es in der Tat unmöglich, diese Spiegel in genau zueinander rechtwinkligen vertikalen Ebenen anzuordnen und zu halten. Folglich hat der Werktisch keine genau zueinander rechtwinkligen X- und Y-Bewegungsachsen.

Der Erfindung liegt somit hauptsächlich die Aufgabe zugrunde, einen interferometrisch geregelten Werktisch mit genau zueinander rechtwinkligen X- und Y-Bewegungsachsen zu schaffen. Dabei soll der Aufwand für die angestrebte genaue Rechtwinkligkeit der beiden Spiegel in vertikalen Ebenen vermieden werden.

Des weiteren soll ein solcher Werktisch geschaffen werden, der austauschbar mit anderen derartigen Werktischen beim Drucken verschiedener Niveaus der Mikroschaltung auf verschiedenen Photomasken des gleichen Satzes oder auf dem gleichen Halbleiterplättchen oder Stapel von Halbleiterplättchen verwendbar ist.

Ausgehend von einem Werktisch gemäß dem Oberbegriff des Anspruchs 1 wird diese Aufgabe durch die Merkmale des Kennzeichens des Anspruchs 1 gelöst.

Der Werktisch nach der Erfindung hat genau rechtwinklige X- und Y-Bewegungsachsen, ohne daß die ersten und zweiten bewegbaren Spiegel in genau rechtwinkligen vertikalen Ebenen angeordnet sein müßten, und ohne daß unerreichbare Winkelbeziehungen zwischen diesen Spiegeln oder anderen Teilen der Stufe erforderlich wären. Dadurch wird der Hauptgrund für den Mangel an Rechtwinkligkeit der herkömmlichen X- und Y-Bewegungsachsen des Werktisches vermieden. Vergleichsweise sind andere Störursachen, wie beispielsweise die Unebenheit der ersten und zweiten bewegbaren Spiegel, unbedeutend und werden im Rahmen dieser Anmeldung vernachlässigt.

Ein weiterer Aspekt dieser Erfindung bezieht sich auf eine Positionsregelschaltung, welche einen bezüglich der Phase verriegelten Regelkreis enthält, um das Auflösungsvermögen der Positionsregelschaltung zu erweitern. Derartige Positionsregelschaltungen können beispielsweise zur Regelung der Position einer interferometrisch geregelten Stufe der vorgenannten Art verwendet werden. Herkömmliche Positionsregelschaltungen zum Regeln der Position einer interferometrisch geregelten Stufe verwenden typischerweise einen reversiblen Zähler, um eine Anzeige über die tatsächliche Position der Stufe zu erhalten (US-A 3 458 259). Das Auflösungsvermögen solcher Positionsregelschaltungen ist daher typischerweise begrenzt durch die Mehrdeutigkeit der letzten Stelle bzw. der Stelle mit dem tiefsten Stellenwert, die durch den Zähler angezeigt wird.

Ein Ziel bei dieser erfindungsgemäßen Ausführungsform besteht darin, eine verbesserte Positionsregelschaltung zu schaffen, und dabei die Mehrdeutigkeit der letzten, d. h. mit geringster Stellenwertigkeit behafteten, durch den Zähler angezeigten Stelle zu vermeiden und das Auflösungsvermögen der Positionsregelschaltung zu erweitern.

Dieses Ziel wird gemäß der bevorzugten Ausführungsform dieses weiteren Aspekts der Erfindung erreicht, indem eine Positionsregelschaltung mit einem veränderlichen Phasenschieber verwendet wird, der auf ein Eingangsreferenzsignal und ein Eingangs-Regelsignal anspricht, um ein Ausgangssignal der gleichen Frequenz wie das Referenzsignal zu erzeugen, wobei das Ausgangssignal jedoch nach Maßgabe des Eingangs-Regelsignales bezüglich der Phase verschoben ist. Hierzu wird ein Phasendetektor verwendet, der durch das Ausgangssignal des veränderbaren Phasenschiebers und ein Eingangsmeßsignal mit einer Frequenz gesteuert wird, die auf die Frequenz des Eingangsreferenzsignales derart bezogen ist, daß ein Positionsregelsignal erzeugt wird, welches das Auflösungsvermögen der Positionsregelschaltung erweitert. Der Phasenschieber enthält einen anderen Phasendetektor, der auf das Eingangsreferenzsignal und ein Ausgangssignal von einer durch N teilenden Schaltung anspricht und einen spannungsgesteuerten Oszillator speist, welcher an die Teilerschaltung ein Ausgangssignal mit einer Frequenz abgibt, die N-mal größer als die Frequenz des Referenzsignales ist. Ein Schieberegister spricht auf die Ausgangssignale des durch die Spannung gesteuerten Oszillators und der Teilerschaltung an und liefert N Ausgangssignale mit verschiedener Phase an einen Datenwähler. Der Datenwähler spricht auf das Eingangsregelsignal an und liefert ein ausgewähltes dieser N Ausgangssignale an den erstgenannten Phasendetektor nach Maßgabe des Eingangsregelsignales.

Im folgenden werden bevorzugte Ausführungsformen der Erfindung anhand der Zeichnungen erläutert. Es zeigt

Fig. 1 eine perspektivische rückseitige Ansicht eines interferometrisch geregelten Werktisches mit genau rechtwinkligen X- und Y-Bewegungsachsen.

Fig. 2 schematisch die Strahlengänge und optische Komponenten der bei dem Werktisch nach Fig. 1 verwendeten Interferometersysteme,

Fig. 3 ein Blockdiagramm eines Paares von Positionierungsregelschaltungen zum Treiben des Werktisches nach Fig. 1,

Fig. 4 ein Blockdiagramm eines anderen Paares von Positionierungsregelschaltungen gemäß einer weiteren bevorzugten Ausführungsform, wobei diese Schaltungen beispielsweise anstelle der Positionierungsregelschaltungen von Fig. 3 verwendbar sind zum Treiben des interferometrisch geregelten Werktisches von Fig. 1,

Fig. 5 ein Blockschaltbild eines Paares von Phasenregelschaltungen einer weiteren Ausführungsform der erfinderischen Ausgestaltung eines zur Positionierungsregelung gemäß Fig. 4 verwendbaren Regelschaltkreises.

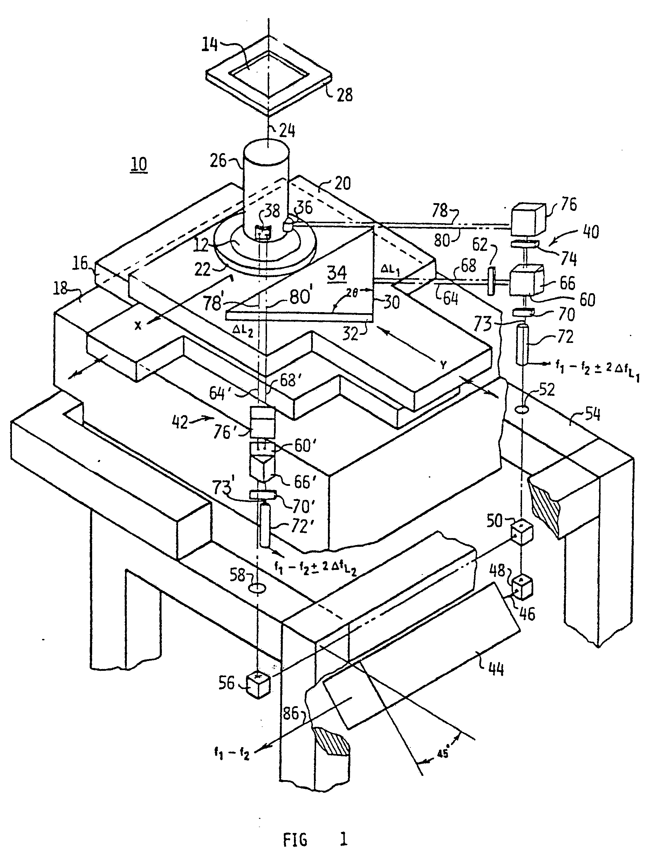

Ein interferometrisch geregelter Werktisch 10 gemäß Fig. 1 dient zur Ausrichtung eines Werkstücks, beispielsweise eines Halbleiterplättchens 12, bezüglich eines Gegenstands, beispielsweise eines Fadenkreuzes oder Rahmens 14 oder eines projizierten Abbildes davon. Der Werktisch 10 enthält eine untere Plattform 16, die mittels Luftlagern auf der flachen oberen Fläche eines Granitblocks 18 gelagert ist zur allgemeinen Bewegung längs einer X-Achse des Werktisches, und eine obere Plattform 20, die mittels Luftlagern auf der flachen oberen Fläche des Granitblocks 18 (durch Ausnehmungen in der unteren Plattform 16) gelagert ist zur allgemeinen Bewegung längs einer rechtwinklig zur X-Achse verlaufenden Y-Achse. Zusätzlich ist die obere Plattform 20 mit der unteren Plattform 16 zur gemeinsamen generellen Bewegung längs der X-Achse verbunden. Daher kann die obere Plattform 20 in einer horizontalen Ebene generell längs der rechtwinkligen X- und Y-Achsen bewegt werden, und diese Bewegung kann in dieser horizontalen Ebene entlang irgendeiner geraden Linie erfolgen, da diese Bewegungen gleichzeitig durchgeführt werden können.

Das Halbleiterplättchen 12 wird auf der oberen Plattform 20 durch einen Vakuumhalter 22 zur Bewegung mit diesem angesaugt. Der Halter 22 ist unterhalb einer Projektionslinse 26 oder eines anderen Bauteils angeordnet, das bei der Bearbeitung des Halbleiterplättchens verwendet wird. Das Fadenkreuz 14 wird durch einen Vakuumhalter 28 direkt oberhalb der Projektionslinse 26 und längs einer optischen Achse von dieser gehalten. Sowohl die Projektionslinse als auch der Halter 28 für das Fadenkreuz 14 sind auf einem an dem Granitblock befestigten Rahmen angeordnet. Bei der Herstellung von integrierten Schaltkreisen oder dgl. aus dem Halbleiterplättchen 12 wird der Werktisch 10 längs der X- und Y-Achsen bewegt, um nacheinander angrenzende Bereiche eines Niveaus der Mikroschaltung welche schon auf dem Halbleiterplättchen gebildet sein können, mit einem Abbild eines anderen Niveaus der auf dem Fadenkreuz 14 enthaltenen Mikroschaltung auszurichten, die noch auf dem Halbleiterplättchen an jedem dieser Bereiche zu drucken ist. Dieses Abbild wird auf das Halbleiterplättchen 12 durch die Projektionslinse 26 geworfen.

Um auf dem Werktisch 10 genau orthogonale X- und Y-Bewegungsachsen zu erhalten, sind zwei längsgestreckte Planspiegel 30 und 32 fest auf der oberen Plattform 20 zur Bewegung mit dieser angeordnet. Diese Spiegel, die nachfolgend als die ersten und zweiten bewegbaren Spiegel 30 und 32 bezeichnet werden, sind symmetrisch zur Y-Achse in ersten bzw. zweiten vertikalen Ebenen angeordnet, die sich an der Y-Achse in einem Winkel von $2\theta$ schneiden. Es sind keine speziellen Meßeinrichtungen oder kritischen Meßverfahren erforderlich, um die ersten und zweiten bewegbaren Spiegel 30 und 32 auf der oberen Plattform 20 des Werktisches 10 zu befestigen, da der Werktisch in nachfolgend beschriebener Weise derart geregelt wird, daß die X- und die Y-Achsen genau rechtwinklig zueinander angeordnet sind und sich an der Y-Achse im Winkel von $2\theta$ zwischen den ersten und zweiten bewegbaren Spiegeln schneiden. Die ersten und zweiten bewegbaren Spiegel 30 und 32 können daher in ersten bzw. zweiten vertikalen Ebenen angeordnet werden, die sich in einem nahezu beliebigen Winkel schneiden können. Zum Zweck der Erläuterung sind die Spiegel fest auf der oberen Plattform 20 des Werktisches 10 in einem rechten Winkel zueinander mittels eines Trägers 34 angeordnet. Die ersten und zweiten Planspiegel 36 und 38 sind fest auf einem Gehäuse der Projektionslinse 26 in einer über dem Träger 34 liegenden Ebene angeordnet. Diese Spiegel, die nachfolgend als die ersten und zweiten stationären Spiegel 36 und 38 bezeichnet werden, entsprechen und sind parallel angeordnet zu den ersten und zweiten bewegbaren Spiegeln 30 bzw. 32.

Die ersten und zweiten Interferometer-Meßsysteme 40 und 42 werden verwendet, um die Geschwindigkeiten der ersten und zweiten bewegbaren Spiegel 30 und 32 bezüglich der ersten und zweiten stationären Spiegel 36 und 38 genau zu messen, während diese längs entsprechender erster (oder $\Delta L1$) und zweiter (oder $\Delta L2$) Meßwege rechtwinklig zu den ersten bzw. zweiten bewegbaren Spiegeln bewegt werden. Dieses erfolgt, wenn immer der Werktisch 10 längs der X-Achse oder der Y-Achse bewegt wird, wobei Meßsignale über die entsprechenden Geschwindigkeiten abgegeben werden. Derartige Interferometer-Meßsysteme sind beispielsweise beschrieben in Application Note 197-2 für den Laserumformer 5501 A der Firma Hewlett-Pakkard Company und in US-A 3 458 259, und sind als erste und zweite Interferometer-Meßsysteme 40 und 42 verwendbar. Die Interferometer-Meßsysteme 40 und 42 verwenden gemeinsam einen Laserumformer 44 mit zwei Frequenzen und einer Schwingungsart zur Aussendung eines Lichtstrahls 46, mit einer ersten Strahlkomponente der Frequenz $f_1$, welche nachfolgend als $f_1$-Licht bezeichnet wird, und einer zweiten parallelen und überlappenden Strahlkomponente mit einer Frequenz $f_2$, welche nachfolgend als $f_2$-Licht bezeichnet wird. Diese parallelen und überlappenden Strahlkomponenten von $f_1$- und $f_2$-Licht haben lineare horizontale bzw. vertikale Polarisationen bezüglich des Laserumformers 44. Eine Strahlablenkeinrichtung 48 lenkt den Strahl des Lichts 46 ab vom Laserumformer 44 nach oben zu einem Strahlteiler 50, der 50% des Lichtstrahls nach oben durch eine Öffnung 52 in einem Rahmen 54 ablenkt, der den Granitblock 18 hält. Der Strahlteiler 50 reflektiert 50% des Lichtstrahls 46 vom Laserumformer 44 zu einer anderen Strahlumlenkeinrichtung 56, von welcher das Licht wiederum nach oben durch eine Öffnung 58 im Rahmen 54 abgelenkt wird.

Der Laserumformer 44, die Strahlablenkeinrichtungen 48 und 56, der Strahlteiler 50 und die verschiedenen Elemente der ersten und zweiten Interferometer-Meßsysteme 40 und 42 können alle auf einem Rahmen befestigt sein, der an dem Granitblock 18 in der dargestellten Anordnung befestigt ist. Die ersten und zweiten bewegbaren Spiegel 30 und 32 sind auf dem Träger 34 unter einem Winkel von 45° bezüglich der Y-Achse angeordnet, und die Meßwerte $\Delta L_1$ und $\Delta L_2$ der ersten bzw. zweiten Interferometer-Meßsysteme 40 und 42 werden um 45° bezüglich der Y-Achse gedreht. Da der Laserumformer 44 in der dargestellten Weise längs der X-Achse befestigt ist, muß der Laserumformer auch um 45° bezüglich der Y-Achse gedreht werden, um die Polarisationsebenen des $f_1$-Lichts und des $f_2$-Lichts unter 45° bezüglich der Y-Achse und somit parallel und rechtwinklig zu den ersten und zweiten Interferometer-Meßsystemen 40 und 42 auszurichten. Dieses ist wichtig, da das maximale Ausgangssignal von den ersten und zweiten Interferometer-Meßsystemen 40 und 42 erhalten wird, wenn diese Polarisationsebenen in der beschriebenen Weise ausgerichtet sind, während im wesentlichen kein Ausgangssignal erhalten werden kann von den ersten und zweiten Interferometer-Meßsystemen, wenn diese Polarisationsebenen unter einem Winkel von 45° bezüglich jedes der ersten und zweiten Interferometer-Meßsysteme ausgerichtet sind.

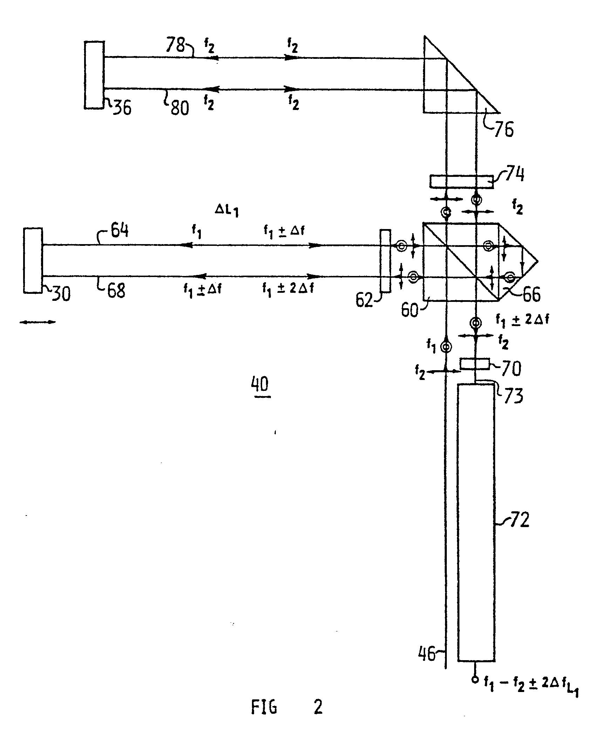

Da die ersten und zweiten Interferometer-Meßsysteme 40 und 42 identisch sind, werden die gleichen Bezugzeichen allgemein für die gleichen Elemente beider Interferometer-Meßsysteme verwendet, wobei die Bezugszeichen für das zweite Interferometer-Meßsystem mit einem Strich versehen sind, und es wird nur das erste Interferometer-Meßsystem 40 im einzelnen erläutert. Wie auch aus Fig. 2 ersichtlich ist, enthält das erste Interferometer-Meßsystem 50 einen polarisierenden Strahlteiler 60, um $f_1$-Licht der linearen horizontalen Polarisationsebene, welches durch einen doppelten Pfeil rechtwinklig zur Papierebene dargestellt ist, zu reflektieren, welches durch die Öffnung 52 des Rahmens 54 gelangt, und um das $f_2$-Licht der linearen vertikalen Polarisationsebene, welches durch einen doppelten Pfeil in der Papierebene dargestellt ist, hindurch zu lassen, welches durch die Öffnung 52 gelangt, wobei ein Hilfspfeil in der Papierebene bei jedem Doppelpfeil angebracht ist, um die Richtung der Lichtausbreitung anzuzeigen. Das durch den polarisierenden Strahlteiler 60 reflektierte $f_1$-Licht gelangt durch eine Viertelwellenplatte 62 zum ersten bewegbaren Spiegel 30 längs eines ersten Abschnitts 64 des Meßwegs $\Delta L_1$, welcher rechtwinklig zum ersten bewegbaren Spiegel verläuft. Da die obere Plattform 20 des Werktisches 10 entweder längs der X-Achse oder längs der Y-Achse bewegt wird, bewirkt die entsprechende Bewegung des ersten bewegbaren Spiegels 30 bezüglich des ersten stationären Spiegels 36 längs des Meßwegs $\Delta L_1$, daß das $f_1$-Licht die Frequenz um $\pm \Delta f$ ändert, wenn es von dem ersten bewegbaren Spiegel zurück längs des ersten Abschnitts 64 des Meßwegs $\Delta L_1$ durch die Viertelwellenplatte 62 reflektiert wird. Die Viertelwellenplatte 62 ändert die Polarisation des in Vorwärtsrichtung hindurchgelangenden $f_1$-Lichts in Licht mit rechtsdrehender Kreispolarisation, welches wiederum in Licht mit linksdrehender Kreispolarisation umgeformt wird, wenn das $f_1$-Licht von dem ersten bewegbaren Spiegel 30 reflektiert wird. Außerdem wird die Polarisation des $f_1 \pm \Delta f$-Lichts, welches in rückwärtiger Richtung reflektiert, in linear vertikal polarisiertes Licht umgeformt. Somit wird das Licht mit der Frequenz $f_1 \pm \Delta f$ durch den polarisierenden Strahlteiler 60 zu einem damit verbunden Umkehrreflektor 66 übertragen, von dem das Licht in Vorwärtsrichtung durch den polarisierenden Strahlteiler und die Viertelwellenplatte 62 zu dem ersten bewegbaren Spiegel 30 längs eines zweiten Abschnitts 68 des $\Delta L_1$-Meßwegs reflektiert wird. Das Licht mit der Wellenlänge $f_1 \pm \Delta f$, welches von dem ersten bewegbaren Spiegel 30 zurück längs des zweiten Abschnitts 68 des $\Delta L_1$-Meßwegs reflektiert wird, ändert die Frequenz um $\pm \Delta f$, wenn die obere Plattform 20 des Werktisches 10 entweder längs der X-Achse oder der Y-Achse bewegt wird. In diesem Fall ändert die Viertelwellenplatte 62 die Polarisation des Lichts mit der Wellenlänge $f_1 \pm \Delta f$, welches in Vorwärtsrichtung hindurchgelangt, in linksdrehend zirkularpolarisiertes Licht, welches wiederum in rechtsdrehend zirkularpolarisiertes Licht umgeformt wird, wenn das Licht mit der Frequenz $f_1 \pm \Delta f$ von dem ersten bewegbaren Spiegel 30 reflektiert wird, und die Polarisation des Lichts mit der Frequenz $f_1 \pm 2 \Delta f$, welches in Rückwärtsrichtung hindurchreflektiert wurde, wird in linear horizontal polarisiertes Licht umgeformt. Das Licht mit der Frequenz $f_1 \pm 2 \Delta f$, welches in rückwärtiger Richtung längs des zweiten Abschnitts 68 des Meßwegs $\Delta L_1$ reflektiert wurde, wird daher durch den polarisierenden Strahlteiler 60 nach unten durch einen Mischpolarisator 70 auf einen photoelektrischen Detektor 72 reflektiert.

In ähnlicher Weise gelangt das durch den polarisierenden Strahlteiler 60 übertragene Licht mit der Frequenz $f_2$ vorwärts durch eine Viertelwellenplatte 74 zu einer Strahlablenkeinrichtung 76, von welcher das Licht zu dem ersten stationären Spiegel 36 längs eines Abschnitts 78 eines Referenzwegs $\Delta L_1$ reflektiert wird, der in der beschriebenen Weise rechtwinklig zu dem ersten stationären Spiegel (wenigstens von der Strahlbeugeeinrichtung 76 aus gesehen vorwärts) verläuft. Dieses Licht mit der Frequenz $f_2$ wird von dem ersten stationären Spiegel 36 zurück längs des ersten Abschnitts 78 des Referenzwegs $\Delta L_1$ zu der Strahlablenkeinrichtung 76 und dann durch die Viertelwellenplatte 74 hindurch reflektiert. Die Viertelwellenplatte 74 ändert die Polarisation des Lichts mit der Frequenz $f_2$, welches in Vorwärtsrichtung durch diese längs des ersten Abschnitts 78 des Referenzwegs $\Delta L_1$ gelangt, in Licht mit linksdrehender Polarisation, wie es wiederum in rechtsdrehend polarisiertes Licht umgeformt wird, wenn das Licht mit der Frequenz $f_2$ von dem ersten stationären Spiegel 36 reflektiert wird, und die Polarisation des Lichts mit der Frequenz $f_2$, welches in rückwärtiger Richtung längs des ersten Abschnitts 78 des Referenzwegs $\Delta L_1$ reflektiert wurde, wird in linear horizontal polarisiertes Licht umgeformt. Somit wird das Licht mit der Frequenz $f_2$, welches von dem ersten stationären Spiegel 36 längs des ersten Abschnitts 78 des Referenzwegs $\Delta L_1$ reflektiert wird, durch den polarisierenden Strahlteiler 60 zu dem Umkehrreflektor 66 reflektiert, von dem aus das Licht auf den polarisierenden Strahlteiler zurückgeworfen wird, wo es durch die Viertelwellenplatte 74 hindurch reflektiert und durch die Strahlablenkeinrichtung 76 auf den ersten stationären Spiegel längs eines zweiten Abschnitts 80 des $\Delta L_1$ Referenzwegs geworfen wird. Dieses Licht mit der Frequenz $f_2$ wird wiederum von dem ersten stationären Spiegel 36 zurück längs des zweiten Abschnitts 80 des $\Delta L_1$ Referenzwegs zu der Strahlablenkeinrichtung 76 und dann durch die Viertelwellenplatte 74 hindurch reflektiert. Die Viertelwellenplatte 74 formt die Polarisation des Lichts mit der Frequenz $f_2$, welches durch diese in Vorwärtsrichtung längs des zweiten Abschnitts 80 des $\Delta L_1$ Referenzwegs hindurchgelangt, in rechtsdrehend polarisiertes Licht um, welches wiederum in linksdrehend polarisiertes Licht umgeformt wird, wenn das Licht mit der Frequenz $f_2$ wieder von dem ersten stationären Spiegel 36 reflektiert wird, und die Polarisation des Lichts mit der Frequenz $f_2$, welches in rückwärtiger Richtung längs des zweiten Abschnitts 80 des $\Delta L_1$ Referenzwegs reflektiert wird, wird in linear vertikal polarisiertes Licht umgeformt. Das Licht mit der Frequenz $f_2$, welches in rückwärtiger Richtung längs des zweiten Abschnitts 80 des $\Delta L_1$ Referenzwegs reflektiert wird, wird daher durch den polarisierenden Strahlteiler 60 nach unten durch den Mischpolarisator 70 hindurch zum photoelektrischen Detektor 72 übertragen mit dem parallelen und überlappenden Licht mit der Frequenz $f_1 \pm 2 \Delta f$ von dem zweiten Abschnitt 68 des $\Delta L_1$ Meßwegs in einem Ausgangslichtstrahl 73. Zur Vereinfachung der Darstellung wurden die Strahlengänge des Eingangslichtstrahls 46, welcher in den polarisierenden Strahlteiler 60 eintritt und des Ausgangslichtstrahls 73, welcher in den photoelektrischen Detektor 72 eintritt, die ersten und zweiten Abschnitte 64 und 68 des $\Delta L_1$ Meßwegs, die ersten und zweiten Abschnitte 78 und 80 des $\Delta L_1$ Referenzwegs und der Umkehrreflektor 66 dargestellt als räumlich in der Papierebene der Fig. 2 angeordnet, wogegen diese Baueinheiten und Strahlengänge tatsächlich räumlich in einer Ebene rechtwinklig zur Papierebene angeordnet sind, wie sich aus der perspektivischen Ansicht gemäß Fig. 1 ergibt.

Der mischende Polarisator 70 mischt das Licht mit der Frequenz $f_1 \pm 2 \Delta f$ und das parallele und überlappende Licht mit der Frequenz $f_2$ des Ausgangslichtstrahls 73, so daß jeder dieser Strahlanteile des Ausgangslichtstrahls, der in den photoelektrischen Detektor eintritt, einen Anteil mit ähnlicher Polarisation hat. Diese ähnlich polarisierten Anteile werden durch den photoelektrischen Detektor 72 gemischt, um ein erstes elektrisches Meßsignal mit einer Frequenz $f_1 - f_2 \pm 2 \Delta f_{L_1}$ am Ausgang des photoelektrischen Detektors zu erhalten. Ein zweites elektrisches Meßsignal mit einer Frequenz $f_1 - f_2 \pm \Delta f_{L_2}$ wird in der gleichen Weise wie vorher beschrieben durch das zweite Interferometer-Meßsystem 42 am Ausgang des photoelektrischen Detektors 72' dieses Systems erzeugt.

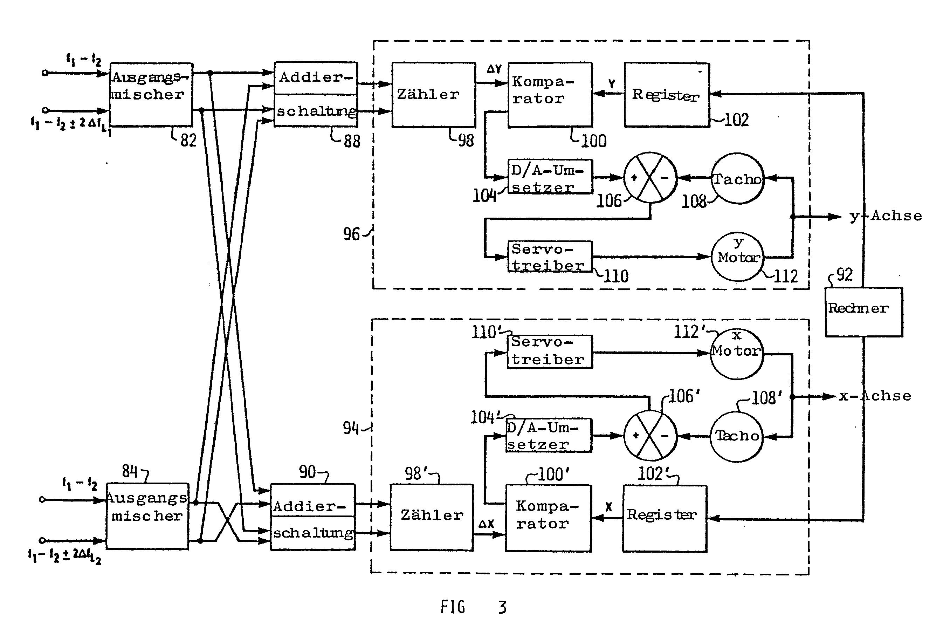

Entsprechend Fig. 3 wird das erste elektrische Meßsignal mit der Frequenz $f_1 - f_2 \Delta f_{L_1}$ dem ersten Eingang eines ersten digitalen Ausgangsmischers 82 des ersten Interferometer-Meßsystems 40 zugeführt, und das zweite elektrische Meßsignal mit der Frequenz $f_1 - f_2 \pm 2 \Delta f_{L_2}$ wird einem ersten Eingang eines zweiten dualen Ausgangsmischers 84 des zweiten Interferometer-Meßsystems 42 zugeführt. Ein elektrisches Referenzsignal mit der Frequenz $f_1 - f_2$, welches durch den Laserumformer 44 an einem elektrischen Ausgang 86 erzeugt wird (siehe Fig. 1), wird einem zweiten Eingang des zweiten Ausgangsmischers 82 und einem zweiten Eingang des zweiten Ausgangsmischers 84 zugeführt. Der erste Ausgangsmischer 82 verknüpft das erste Meßsignal und das Referenzsignal, um ein aus einem ersten Impulszug bestehendes Meßsignal mit einer Wiederholungsgeschwindigkeit von $2 \Delta L_1$ an einem inkrementierenden oder einem dekrementierenden Ausgang zu erzeugen, je nachdem ob das Vorzeichen der $\pm 2 \Delta_1$ Komponente der Frequenz des ersten Meßsignales positiv bzw. negativ ist. Die Wiederholungsgeschwindigkeit des ersten Impulssignalzugs ist proportional der Geschwindigkeit des ersten bewegbaren Spiegels 30, während dieser bezüglich des ersten stationären Spiegels 36 längs des $\Delta L_1$ Meßweges des ersten Interferometersystems 40 bewegt wird, was geschieht, wenn die obere Plattform 20 des Werktisches 10 entweder entlang der X- oder der Y-Bewegungsachse des Werktisches bewegt wird. In ähnlicher Weise verknüpft der zweite Ausgangsmischer 84 das zweite Meßsignal und das Referenzsignal und erzeugt ein aus einem zweiten Impulszug bestehendes Meßsignal mit einer Wiederholungsgeschwindigkeit von $2 \Delta f_{L_2}$ an einem inkrementierenden oder dekrementierenden Ausgang je nachdem, ob das Vorzeichen des $\pm 2 \Delta f_{L_2}$ Anteils der Frequenz des zweiten Meßsignals positiv oder negativ ist. Die Wiederholungsgeschwindigkeit des zweiten Impulszugs ist proportional der Geschwindigkeit des zweiten bewegbaren Spiegels 32, während dieser bezüglich des zweiten stationären Spiegels 38 längs des $\Delta L_2$ Meßwegs des zweiten Interferometer-Meßsystems 42 bewegt wird. Dieses ist ebenfalls der Fall, wenn die obere Plattform 20 des Werktisches 10 entweder längs der X- oder der Y-Bewegungsachse des Werktisches bewegt wird.

Die Impulse der ersten und zweiten aus Impulszügen bestehenden Signale, welche an den inkrementierenden Ausgängen der ersten und zweiten Ausgangsmischer 82 und 84 auftreten, werden einem ersten Paar von Eingängen einer ersten dualen Addierschaltung 88 zugeführt, welche einen Impulszug erzeugt, welcher der Summe dieser Impulse an einem inkrementierenden Ausgang der ersten dualen Addierschaltung entspricht. In ähnlicher Weise werden die Impulse der ersten und zweiten Impulszüge der Signale an den dekrementierenden Ausgängen der ersten und zweiten Ausgangsmischer 82 und 84 einem zweiten Paar von Eingängen der ersten dualen Addierschaltung 88 zugeführt, welche einen Impulszug erzeugt, welcher der Summe dieser Impulse am dekrementierenden Ausgang der ersten dualen Addierschaltung entspricht. Die dadurch an den inkrementierenden und dekrementierenden Ausgängen der ersten Addierschaltung 88 erzeugten Impulszüge stellen die Summe der ersten und zweiten aus Impulszügen bestehenden Signale dar. Die Impulse des ersten Signales am inkrementierenden Ausgang des ersten Ausgangsmischers 82 und die Impulse des zweiten Signales am dekrementierenden Ausgang des zweiten Ausgangsmischers 84 werden einem ersten Paar von Eingängen einer zwei-

ten dualen Addierschaltung 90 zugeführt, welche die Summe dieser Impulse an einem inkrementierenden Ausgang der zweiten Addierschaltung erzeugt. In ähnlicher Weise werden die Impulse des ersten aus einem Impulszug bestehenden Signals, die am dekrementierenden Ausgang des ersten Ausgangsmischers 82 auftreten, und die Impulse des zweiten aus einem Impulszug bestehenden Signals, welche am inkrementierenden Ausgang des zweiten Ausgangsmischers 84 auftreten, einem zweiten Paar von Eingängen der zweiten Addierschaltung 90 zugeführt. Die Summen der dadurch erzeugten Impulse an den inkrementierenden und dekrementierenden Ausgängen der zweiten Addierschaltung 90 stellen die Differenz der ersten und zweiten impulsförmigen Signale dar. Entsprechend der Differenz und der Summe der ersten und zweiten aus Impulszügen bestehenden Signale und der digitalen Signale über die X- und Y-Endpunkte, welche beispielsweise von einem Rechner 92 aufgenommen werden, bewegen die Regelungsschaltungen 94 und 96 für die Positionierung entlang den X- und Y-Achsen die obere Plattform 20 des Werktisches 10 längs genau rechtwinklig zueinander befindlicher X- und Y-Achsen, wobei die Y-Achse den Winkel $2\theta$ zwischen den ersten und zweiten beweglichen Spiegeln 30 und 32 schneidet, so daß die obere Plattform 20 genau ausgerichtet wird, wie durch die digitalen Datensignale über die X- und Y-Endpunkte spezifiziert wird. Diese Bewegungen der oberen Plattform 20 längs genau rechtwinkliger X- und Y-Achsen wird durch die Regelungsschaltungen 94 und 96 entsprechend den folgenden Gleichungen ausgeführt:

(1)  $\Delta X = K_x(\Delta L_1 - \Delta L_2)$, wobei
     $K_x = 1/2 \cos \theta$; und
(2)  $\Delta Y = K_y(\Delta L_1 + \Delta L_2)$, wobei
     $K_y = 1/2 \sin \theta$,

worin $\Delta L_1$ und $\Delta L_2$ die Verlagerungen der ersten und zweiten beweglichen Spiegel 30, 32 (relativ zu den ersten und zweiten stationären Spiegeln) längs der Meßwege der ersten und zweiten Interferometer-Meßsysteme sind, wenn die obere Plattform 20 längs der X- oder der Y-Achse bewegt wird.

Die Rechtwinkligkeit der Bewegungen um $\Delta X$ und $\Delta Y$ der oberen Plattform 20 längs X- und der Y-Bewegungsachsen des Werktisches 10 entsprechend den Gleichungen (1) und (2) ist durch die Tatsache zu begründen, daß $\Delta X$ eine Funktion von $\cos \theta$ und $\Delta Y$ eine Funktion von $\sin \theta$ ist, und daß diese cos- und sin-Winkel immer komplementären Winkeln entsprechen.

Da die Regelschaltkreise 94 und 96 für die Positionierung entlang den X- und Y-Achsen identisch sind, werden die gleichen Bezugszeichen für die gleichen Elemente beider Schaltkreise verwendet, wobei für die Schaltkreise zur Positionierung längs der X-Achse mit einem Strich markiert werden, und es wird im einzelnen nur der Schaltkreis für die Positionierung entlang der Y-Achse erläutert. Die an den inkrementierenden und dekrementierenden Ausgängen der ersten Addierschaltung 88 auftretenden Impulse werden einem reversiblen Zählen 98 zugeführt, der diese Impulse zählt, um ein digitales Ausgangssignal $\Delta Y$ zu erzeugen, welches proportional der Summe $(\Delta L_1 + \Delta L_2)$ der Verschiebungen $\Delta L_1$ und $\Delta L_2$ der ersten und zweiten bewegbaren Spiegel 30 und 32 bezüglich der ersten und zweiten stationären Spiegel 36 und 38 längs der $\Delta L_1$- und $\Delta L_2$-Meßwege der ersten und zweiten Interferometer-Meßsysteme 40 bzw. 42 ist, wenn die obere Plattform 20 des Werktisches 10 entweder längs der X-Achse oder der Y-Achse des Werktisches bewegt wird. Der Zähler 98 integriert die Summe der Geschwindigkeiten der ersten und zweiten bewegbaren Spiegel 30 und 32 über der Zeit, wenn diese Geschwindigkeiten durch die ersten bzw. zweiten Interferometer-Meßsysteme 40 bzw. 42 gemessen werden, um das digitale Ausgangssignal $\Delta Y$ zu erzeugen. Dieses Ausgangssignal $\Delta Y$ wird einem Eingang eines Komparators 100 zugeführt, und das digitale Datensignal über den Y-Endpunkt vom Rechner 92 wird in einem Register 102 gespeichert und dem anderen Eingang des Komparators zugeführt. Der Komparator 100 erzeugt ein digitales Vergleichssignal, welches der Differenz zwischen den zugeführten digitalen Signalen entspricht und der Strecke proportional ist, und welche die obere Plattform 20 längs der Y-Achse bewegt werden muß, um die Position der Y-Achse zu erreichen, die durch das digitale Datensignal über den Y-Endpunkt spezifiziert ist. Dieses digitale Vergleichssignal wird einem D/A-Umsetzer 104 zugeführt, der es in ein analoges Spannungssignal umformt und einem Eingang einer Summierschaltung 106 zuführt. Ein anderes analoges Spannungssignal wird durch einen Tachometer 108 in nachfolgend beschriebener Weise erzeugt und dem anderen Eingang der Summierschaltung 106 zugeführt. Somit erzeugt die Summierschaltung 106 ein Ausgangsspannungssignal, welches der Differenz zwischen dem analogen Spannungssignal vom A/D-Umsetzer 104 und dem Tachometer 108 entspricht. Dieses Ausgangsspannungssignal wird einem Servoschaltkreis 110 zugeführt, der dementsprechend einen Servomotor 112 für die Y-Achse speist, der auf der oberen Plattform 20 angeordnet ist und gegenüber der unteren Plattform 16 reagiert, um die obere Plattform längs der Y-Achse in die Position der Y-Achse zu bringen, welche durch das digitale Datensignal über den Y-Endpunkt spezifiziert ist. Der Tachometer 108 ist mit dem Servomotor 112 funktionell verbunden und erzeugt ein analoges Spannungssignal, welches proportional der Geschwindigkeit des Motors für die Y-Achse ist und führt dieses der Summierschaltung 106 zu. Dadurch wird das Ausgangsspannungssignal von der Summierschaltung 106 vermindert und der Servomotor 112 für die Y-Achse läuft langsamer, wenn die obere Plattform 20 sich der Position auf der Y-Achse nähert, die durch das digitale Datensignal über den Y-Endpunkt spezifiziert ist, so daß die obere Plattform nicht über die spezifizierte Position auf der Y-Achse hinaus verschoben wird.

Der reversible Zähler 98' der Regelungsschaltung 94 für die X-Achsenposition integriert in entsprechender Weise die Differenz der Geschwindigkeiten der ersten und zweiten bewegbaren Spiegel 30 und 32, wenn diese Geschwindigkeiten durch die ersten und zweiten Interferometer-Meßsysteme 40 bzw. 42 gemessen werden, um ein digitales Ausgangssignal $\Delta X$ zu erzeugen, welches proportional der Differenz $(\Delta L_1 - \Delta L_2)$ der Verschiebungen $\Delta L_1$ und $\Delta L_2$ der ersten und zweiten bewegbaren Spiegel bezüglich der ersten und zweiten stationären Spiegel 36 und 38 längs der Meßwege $\Delta L_1$ und $\Delta L_2$ der ersten bzw. zweiten Interferometer-Meßsysteme ist, während die obere Plattform 20 des Werktisches 10 entweder entlang der X-Achse oder der Y-Achse des Werktisches bewegt wird. Entsprechend diesem digitalen Ausgangssignal $\Delta X$ und einem digitalen Datensignal über den X-Wert, das in dem Register 102' durch den Rechner 92 gespeichert ist, speist die Servotreiberschaltung 110' den Servomotor 112' für die X-Achse, welcher auf der unteren Plattform 16 des Werktisches 10 befestigt ist und gegenüber dem Granitblock 18 arbeitet und die untere Plattform 16 und damit die obere Plattform 20 in die X-Achsenposition bringt, welche durch das digitale Datensignal über den X-Endpunkt spezifiziert ist. Somit wird die obere Plattform 20 entlang genau rechtwinkliger X- und Y-Achsen entsprechend der Differenz $(\Delta L_1 - \Delta L_2)$ und der Summe $(\Delta L_1 + \Delta L_2)$ der Verschiebungen der ersten und zweiten bewegbaren Spiegel 30 und 32 bezüglich der ersten und zweiten stationären Spiegel 36 und 38 längs der Meßwege $\Delta L_1$ und $\Delta L_2$ der ersten bzw. zweiten Interferometer-Meßsysteme 40 bzw. 42 bewegt, die durch die entsprechenden Ausdrücke in den Gleichungen (1) und (2) spezifiziert sind. In der Praxis können die Konstanten $K_x$ und $K_y$ dieser Gleichungen bestimmt werden, ohne daß der halbe Winkel $\theta$ zwischen den ersten und zweiten bewegbaren Spiegeln 30 und 32 bekannt ist oder gemessen wird. Diese Konstanten können bestimmt werden, indem einfach ein Referenzkontaktglied an der oberen Plattform 20 angeordnet wird, ein Meßklotz mit beispielsweise 10 cm Länge auf der oberen Plattform längs der Y-Achse und an dem Referenzkontaktglied anliegend angeordnet wird, ein Auslenkungs-Meßfühler eines elektronischen Meßgeräts in einer festen Position bezüglich der oberen Plattform längs der Y-Achse und in dem Weg des Meßklotzes und des Referenzkontaktgliedes angebracht wird, der Werktisch entlang der Y-Achse weiterbewegt wird, um den Meßklotz gegen den Meßfühler zu drücken, bis das elektronische Meßgerät auf Null gestellt wird, und dann auch der reversible Zähler 98 der Positionsregelschaltung 96 für die Y-Achsenposition auf Null gestellt wird, die obere Plattform längs der Y-Achse zurückbewegt und der Meßklotz entfernt wird, die obere Plattform vorwärts zur Y-Achse zur Anlage des Referenzkontaktgliedes gegen den Meßfühler gebracht wird, bis das elektronische Meßgerät wieder auf Null gestellt ist, die Länge des Meßklotzes durch den auf diesem registrierten Zählerstand des Zählers 98 geteilt wird und $K_y$ in Zoll pro Zählerstand bestimmt wird und das gleiche Verfahren für die X-Achse mit dem gleichen Referenzkontaktglied, dem gleichen Meßklotz und reversiblen Zähler 98' der Regelungsschaltung 34 für die X-Achsenpositionierung zur Bestimmung von $K_x$ in Zoll pro Zählerstand wiederholt wird. Da Meßklötze gewöhnlich durch das Eichbüro mit Submikrongenauigkeit geeicht werden, erlaubt dieses Kalibrierverfahren, daß die obere Plattform 20 des Werktisches 10 längs der rechtwinkligen X- und Y-Achsen mit extrem hoher Präzision bewegt wird. Die Konstanten $K_x$ und $K_y$, sowie andere möglicherweise zur Kompensation von atmosphärischen Änderungen verwendeten Konstanten, sind in dem Rechner 92 gespeichert und werden zur Bestimmung eines Satzes von Paaren von Datensignalen über die X- und Y-Endpunkte bestimmt, die für den gewünschten Schritt- und Wiederholungsvorgang erforderlich sind. Wenn jedes Paar von Datensignalen über die X- Y-Endpunkte durch den Rechner 92 den Registern 102' und 102 der Positionsregelschaltungen 94 und 96 über die X- und Y-Achsenpositionierung zugeführt wird, wird die obere Plattform 20 des Werktisches 10 nacheinander schrittweise längs genau rechtwinkliger X- und Y-Achsen in die durch das Paar von X- und Y-Endpunktdatensignalen spezifizierte Position bewegt, so daß nacheinander aneinander angrenzende Bereiche der Mikroschaltung eines Niveaus auf dem Halbleiterplättchen 12 mit dem projizierten Abbild des Fadenkreuzes oder Rahmens 14 ausgerichtet werden. Da die obere Plattform 20 entlang genau rechtwinkliger X- und Y-Achsen schrittweise weitergeschaltet wird, können andere derartige Werktische austauschbar beim Drucken der verschiedenen Niveaus der Mikroschaltung auf demselben Halbleiterplättchen 12 verwendet werden.

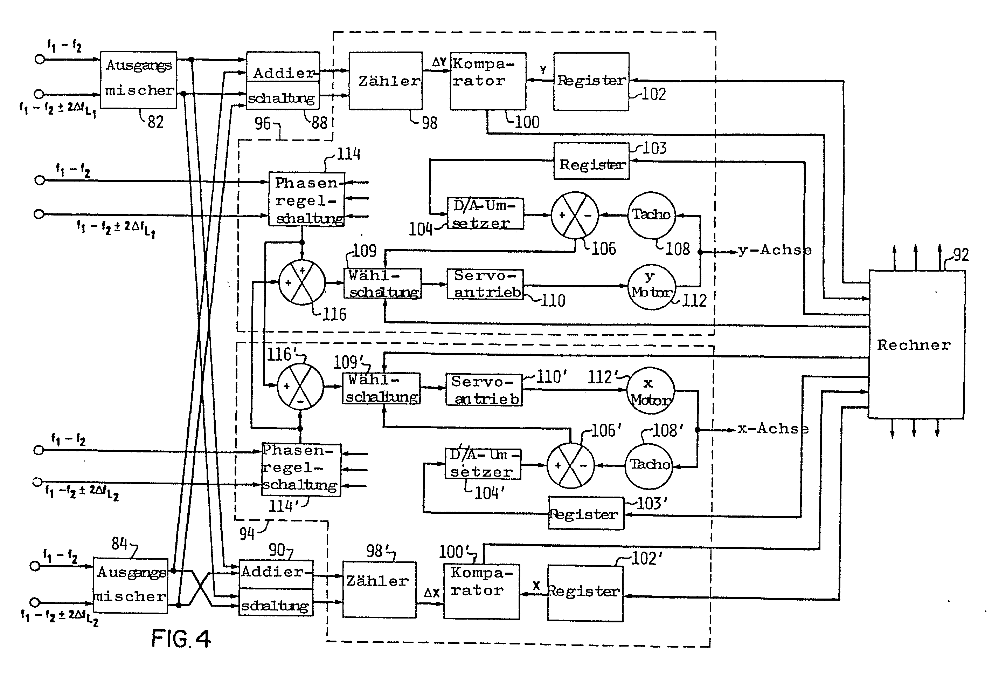

Entsprechend Fig. 4 wird ein anderes Paar von Positionsregelschaltungen 94 für die X- und Y-Achsen erläutert, das anstelle der bisher in Verbindung mit Fig. 3 verwendeten Positionierungsschaltung benutzt werden kann zur Regelung der Position des interferometrisch geregelten Werktisches gemäß Fig. 1. Da diese Positionsregelschaltungen 94 und 96 für die Positionierung entlang der X- und Y-Achse identisch sind, werden wiederum die gleichen Bezugszeichen für die gleichen Elemente beider Schaltkreise verwendet, wobei die Elemente des Regelschaltkreises für die X-Positionierung mit einem Strich versehen werden, und es wird im einzelnen nur der Regelschaltkreis 96 beschrieben. Die Impulse an den inkrementierenden und dekrementierenden Ausgängen der ersten dualen Addierschaltung 88 werden wieder einem reversiblen Zähler 98 zugeführt, der diese Impulse zählt und ein digitales Ausgangssignal $\Delta Y$ herstellt, welches pro-

portional der Summe $(\Delta L_1 + \Delta L_2)$ der Verschiebungen $\Delta L_1$ und $\Delta L_2$ der ersten und zweiten bewegbaren Spiegel 30 und 32 bezüglich der ersten und zweiten stationären Spiegel 36 und 38 längs der $\Delta L_1$- und $\Delta L_2$-Meßwege der ersten bzw. zweiten Interferometer-Meßsysteme 40 bzw. 42 ist, wenn die obere Plattform 20 des Werktisches 10 entlang der X-Achse oder der Y-Achse bewegt wird. Der reversible Zähler 98 integriert wieder die Summe der Geschwindigkeiten der ersten und zweiten bewegbaren Spiegel 30 und 32 über der Zeit, wenn diese Geschwindigkeiten durch die ersten bzw. zweiten Interferometer-Meßsysteme 40 bzw. 42 gemessen werden, um das digitale Ausgangssignal $\Delta Y$ abzuleiten. Dieses Ausgangssignal $\Delta Y$ wird wieder einem Eingang eines Komparators 100 zugeführt, und das digitale Datensignal über den Y-Wert vom Rechner 92 wird wieder in einem Register 102 gespeichert und dem anderen Eingang des Komparators zugeführt. Der Komparator 100 erzeugt ein digitales Vergleichssignal, welches der Differenz zwischen den ihm zugeführten digitalen Signalen entspricht und proportional der Strecke ist, um welche die obere Plattform 20 des Werktisches 10 längs der Y-Achse bewegt werden muß, um die Position auf der Y-Achse zu erreichen, die durch das Y-Datensignal spezifiziert ist. Dieses digitale Vergleichssignal wird dem Rechner 92 zugeführt, der wieder bei einem von Null abweichenden Eingangssignal nacheinander jedes von einer Reihe von digitalen Geschwindigkeitssignalen in einem Register 103 speichert. Diese digitalen Geschwindigkeitssignale und die Dauer, während derer sie in dem Register 103 gespeichert sind, definieren ein optimales Profil der Beschleunigung, der Maximalgeschwindigkeit und der Bremsgeschwindigkeiten, wie es in bekannter Weise festgelegt werden kann, für die Strecke, um welche die obere Plattform 20 des Werktisches 10 längs der Y-Achse bewegt werden muß. Jedes in dem Register 103 gespeicherte digitale Geschwindigkeitssignal wird einem D/A-Umsetzer 104 zugeführt, der dieses in ein analoges Spannungssignal umformt und einem Eingang einer Summierschaltung 106 zuführt. Ein anderes analoges Spannungssignal wird durch einen Tachometer 108 in der vorbeschriebenen Weise erzeugt und dem anderen Eingang der Summierschaltung 106 zugeführt. Somit erzeugt die Summierschaltung 106 eine Ausgangsspannung, die der Differenz zwischen dem analogen Spannungssignal vom D/A-Umsetzer 104 und vom Tachometer 108 entspricht. Bei einem von Null abweichenden Vergleichssignal vom Komparator 100 betätigt der Rechner 92 auch eine Wählschaltung 109 und führt das Ausgangsspannungssignal von der Summierschaltung 106 einer Servotreiberschaltung 110 zu, welche einen Servomotor 112 für die Y-Achse treibt. Dieser Servomotor 112 ist auf der oberen Plattform 20 befestigt und arbeitet gegen die untere Plattform 16 des Werktisches 10 und bewegt die obere Plattform dadurch längs der Y-Achse zu der Position auf der Y-Achse, welche durch das Datensignal über den Y-Wert bestimmt ist. Der Tachometer 108 ist funktionell mit dem Servomotor 112 für die Y-Achse verbunden und erzeugt ein analoges Spannungssignal, welches proportional dem IST-Wert der Geschwindigkeit des Servomotors für die Y-Achse ist, und führt dieses der Summierschaltung 106 zu. Dadurch wird das Ausgangsspannungssignal von der Summierschaltung 106 verringert und dadurch die tatsächliche Geschwindigkeit und die gewünschte Geschwindigkeit der Servomotors 112 für die Y-Achse gleichgemacht.

Der reversible Zähler 98' der Regelschaltung 94 zur Positionierung entlang der X-Achse integriert in ähnlicher Weise die Differenz der Geschwindigkeiten der ersten und zweiten bewegbaren Spiegel 30 und 32, wenn diese Geschwindigkeiten durch die ersten bzw. zweiten Interferometer-Meßsysteme 40 bzw. 42 gemessen werden, um ein digitales Ausgangssignal $\Delta X$ zu erzeugen, welches proportional der Differenz $(\Delta L_1 - \Delta L_2)$ der Verschiebungen $\Delta L_1$ und $\Delta L_2$ der ersten und zweiten bewegbaren Spiegel bezüglich der ersten und zweiten stationären Spiegel 36 und 38 längs der $\Delta L_1$- und der $\Delta L_2$-Meßwege der ersten bzw. zweiten Interferometer-Meßsysteme ist, während die obere Plattform 20 des Werktisches 10 entlang entweder der X-Achse oder der Y-Achse bewegt wird. Entsprechend diesem digitalen Ausgangssignal $\Delta X$ und einem Datensignal über den X-Wert, welches in dem Register 102' durch den Rechner 92 gespeichert ist, speist die Servotreiberschaltung 110' den Servomotor 112' für die X-Achsenpositionierung. Dieser Motor 112' ist auf der unteren Plattform 16 des Werktisches befestigt und arbeitet gegen den Granitblock 18, auf dem die oberen und unteren Plattformen 20 und 16 befestigt sind, so daß die untere Plattform und damit auch die obere Plattform, welche mit der unteren Plattform verbunden ist zur Bewegung mit dieser entlang der X-Achse, in die Position auf der X-Achse bewegt werden, die durch das Datensignal über den X-Wert bestimmt ist.

Somit wird die obere Plattform 20 wieder entlang der rechtwinkligen X- und Y-Achsen entsprechend der Differenz $(\Delta L_1 - \Delta L_2)$ und der Summe $(\Delta L_1 + \Delta L_2)$ der Verschiebungen der ersten und zweiten bewegbaren Spiegel 30 und 32 bezüglich der ersten und zweiten stationären Spiegel 36 und 38 entlang der Meßwege $\Delta L_1$ und $\Delta L_2$ der ersten bzw. zweiten Interferometer-Meßsysteme 40 bzw. 42 bewegt entsprechend den Ausdrücken in den Gleichungen (1) und (2). In der Praxis können die Konstanten $K_x$ und $K_y$ dieser Gleichungen bestimmt werden, ohne daß genau der halbe Winkel $\theta$ zwischen den ersten und zweiten bewegbaren Spiegeln 30 und 32 bekannt sein muß. Die Konstanten $K_x$ und $K_y$ sind zusammen mit anderen Konstanten, welche zur Kompensation von Änderungen der atmosphärischen Bedingungen und dergleichen verwendet werden können, in dem Rechner 92 gespeichert und werden zur Bestimmung eines Satzes von Paaren von Datensignalen über die X- und Y-Werte nacheinander durch den Rechner 92 den Registern 102' und 102 der Regelschaltkreise 94 und 96 für die Positionierung entlang den X- und den Y-Achsen zugeführt, wie vorher beschrieben wurde, um nacheinander die obere Plattform 20 des Werktisches 10 längs der zu einander rechtwinkligen X- und Y-Achsen in die Positionen zu bewegen, die durch die Paare von Datensignalen über die X/Y-Endpunkte bestimmt sind.

Das Auflösungsvermögen der Regelschaltkreise 94 und 96 für die Positionierung entlang den X- und Y-Achsen gemäß Fig. 4 wird entsprechend der bevorzugten Ausführungsform dieser Erfindung erweitert, indem die Regelschaltung 96 für die Positionierung entlang der Y-Achse mit einer Phasenregelschaltung 114 versehen wird, die auf das Referenzsignal mit der Frequenz $f_1 - f_2$, das erste Meßsignal mit der Frequenz $f_1 - f_2 \pm 2\,\Delta f_{L_1}$ und ein aus drei Bits bestehendes Regel- oder Auswählcodesignal anspricht, das durch den Rechner 92 entsprechend einem Nullabgleichssignal vom Komparator 100 abgegeben wird, um ein Regelsignal zur Positionierung in der nachfolgend beschriebenen Weise zu erzeugen. In ähnlicher Weise ist die Regelschaltung 94 mit einem Phasenregelkreis 114' versehen, der auf das Referenzsignal mit der Frequenz $f_1 - f_2$, das zweite Meßsignal mit der Frequenz $f_1 - f_2 \pm 2\,\Delta f_{L_2}$ und ein anderes aus drei Bits bestehendes Regel- oder Wählcodesignal anspricht, das vom Rechner 92 entsprechend einem Nullvergleichssignal vom Komparator 10' abgegeben wird, um ein anderes Positionierungsregelsignal in der noch zu beschreibenden Weise zu erzeugen. Diese drei Positionsregelsignale werden einem Paar von Eingängen einer Summierschaltung 116 der Regelschaltung 96 für die X-Achsenposition zugeführt, um ein Ausgangsspannungssignal zu erzeugen, welches der Summe der Positionsregelsignale entspricht. Sie werden auch einem Paar Eingängen einer Summierschaltung 116' in der Regelschaltung 94 für die X-Achsenposition zugeführt, um ein Ausgangsspannungssignal zu erzeugen, welches der Differenz der Positionsregelsignale entspricht. Bei Nullabgleichssignalen von den Komparatoren 100 und 100' betätigt der Rechner 92 die Wählschaltungen 109 und 109', und die Ausgangsspannungssignale von den Summierschaltungen 116 und 116' werden den Servotreiberschaltungen 110 bzw. 110' zugeführt. Dadurch werden diese Servomotoren 112 und 112' für die X- und Y-Achsen gespeist und bewegen die obere Plattform 20 des Werktisches 10 genau in die gewünschten X- und Y-Achsenpositionen.

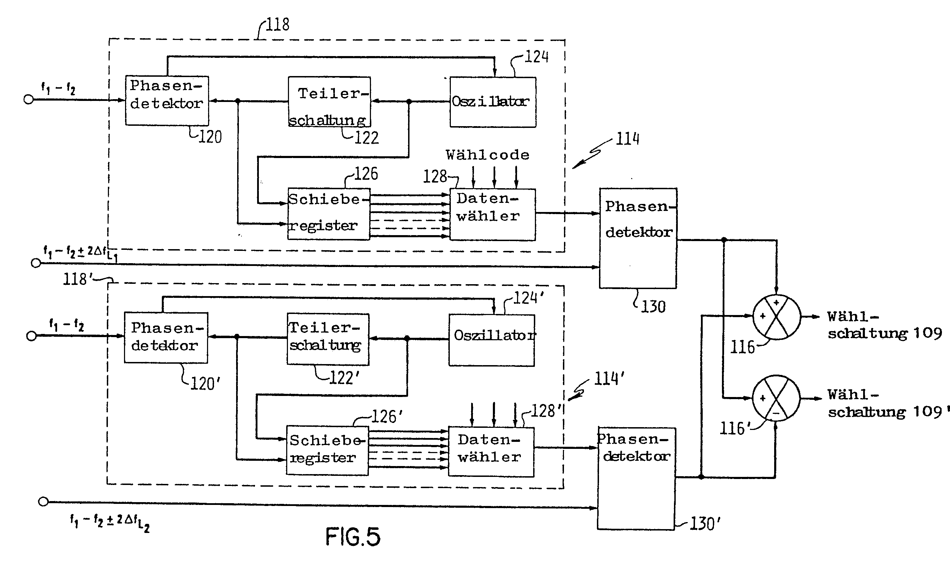

Aus Fig. 5 geht ein Blockschaltbild der Phasenregelschaltungen 114 und 114' für die Regelschaltkreise 96 und 94 für die X- und Y-Positionen aus Fig. 4 hervor. Da diese Phasenregelschaltkreise 114 und 114' identisch sind, werden für die gleichen Elemente beider Phasenregelschaltungen die gleichen Bezugszeichen verwendet, wobei diejenigen für die Phasenregelschaltung 114 der X-Achsenpositionierungsregelschaltung 94 in Fig. 4 mit einem Strich versehen sind, und nur die Phasenregelschaltung 114 für die Regelschaltung 96 für die Y-Achsenposition gemäß Fig. 4 im einzelnen beschrieben wird.

Die Phasenregelschaltung 114 enthält einen steuerbaren Phasenschieber 118, der das Referenzsignal mit der Frequenz $f_1 - f_2$ aufnimmt und ein Ausgangssignal mit der gleichen Frequenz erzeugt, welches bezüglich der Phase verschoben ist entsprechend dem aus drei Bit bestehenden Wählcode vom Rechner 92. Dieser Phasenschieber enthält einen Phasendetektor 120 mit einem ersten Eingang, dem das Referenzsignal mit der Frequenz $f_1 - f_2$ zugeführt wird, und einem zweiten Eingang, dem ein Ausgangssignal von einer Teilerschaltung 122 mit dem Teiler N zugeführt wird, wie noch erläutert wird. Entsprechend diesen Eingangssignalen führt der Phasendetektor 120 einem mittels einer Spannung steuerbaren Oszillator 124 ein Ausgangsspannungssignal derart zu, daß der Oszillator gespeist wird und ein Ausgangssignal mit einer Frequenz erzeugt, welche N-mal größer als die Frequenz $f_1 - f_2$ des Referenzsignals ist. Dieses Ausgangssignal von dem Oszillator 124 wird einem Eingang der Teilerschaltung 122 und einem Takteingang eines Schieberegisters 126 zugeführt.

Die Teilerschaltung 122 teilt dieses Ausgangssignal durch N, wobei zum Zwecke der Erläuterung von einem Wert von acht ausgegangen wird, und führt das resultierende Ausgangssignal dem zweiten Eingang des Phasendetektors 120 und auch einem Dateneingang des Schieberegister 126 zu. Entsprechend den zugeführten Ausgangssignalen von der Teilerschaltung 122 und dem Oszillator 124 führt das Schieberegister 126 N (oder acht) Ausgangssignale mit verschiedener Phase (wobei sich der Phasenwert jedes dieser Signale von demjenigen des vorhergehenden Signales um 360°/N oder um 45° unterscheidet) einem Datenwähler 128 zu. Der Datenwähler 128 führt ein ausgewähltes dieser Ausgangssignale vom Schieberegister 126 dem Ausgang des steuerbaren Phasenschiebers 118 zu entsprechend dem aus drei Bit bestehenden Wählcodesignal, welches vom Rechner 92 zugeführt wird bei einem Nullabgleichsignal vom Komparator 100. Wie vorher ausgeführt wurde, hat das ausgewählte Ausgangssignal die gleiche Frequenz $f_1 - f_2$ wie das Referenzsignal.

Die Phasenregelschaltung 114 enthält auch einen Phasendetektor 130 mit einem ersten Eingang, bei dem das gewählte Ausgangssignal, d. h. das Ausgangssignal mit der gewünschten Phasenverschiebung, der Frequenz $f_1 - f_2$ von dem steuerbaren Phasenschieber 118 zugeführt wird, sowie einen zweiten Eingang, dem das erste Meßsignal mit der Frequenz $f_1 - f_2 \pm 2\,\Delta f_{L_1}$ zugeführt wird. Entsprechend diesen Signalen gibt der Phasendetektor 130 ein Positions-Steuersignal an einen Eingang von jeder der Summierschaltungen 116 und 116' in der beschriebenen Weise ab, wobei dieses Signal proportional der Differenz der Phase der Eingangssignale ist. In ähnlicher Weise sprechen der steuerbare Phasenschieber 118' und der Phasendetektor 130' der Phasenregelschaltung 114' auf das Referenzsignal mit der Frequenz $f_1-f_2$ auf das andere aus drei Bits bestehende Wählcodesignal vom Rechner 92 und auf das zweite Meßsignal mit der Frequenz $f_1-f_2\pm2\,\varDelta f_{L_2}$ an und geben ein anderes Positionsregelsignal, welches proportional der Phasendifferenz zwischen dem ausgewählten Ausgangssignal vom steuerbaren Phasenschieber 118' und dem zweiten Meßsignal ist, an den anderen Eingang jeder der Summierschaltungen 116 und 116' ab. Die Summe und die Differenz dieser drei Positionsregelsignale werden den Wählschaltungen 109 und 109' der Regelschaltkreise 96 bzw. 94 für die X- und Y-Achsenposition gemäß Fig. 4 zugeführt, um das Auflösungsvermögen dieser Positionsregelschaltungen in der beschriebenen Weise zu erweitern.

## Patentansprüche

1. Werktisch (10) mit einer in ersten und zweiten orthogonalen Achsen (Y, X) beweglichen Plattform (20), wobei erste und zweite Spiegel (30, 32) auf der Plattform (20) mit dieser beweglich angeordnet sind, erste und zweite Interferometer-Meßsysteme (40, 42) vorgesehen sind, welche für die Bewegung der ersten und zweiten Spiegel (30, 32) längs erster und zweiter Meßwege ($\varDelta L_1$, $\varDelta L_2$) rechtwinklig zu den ersten bzw. zweiten Spiegeln repräsentative erste und zweite Meßsignale ($\pm2\,\varDelta f_{L_1}$, $\pm2\,\varDelta f_{L_2}$) erzeugen, und mit ersten und zweiten Regeleinrichtungen (96, 94) zur Regelung der Bewegungen der Plattform (20) längs der orthogonalen ersten und zweiten Achsen (Y, X) in Abhängigkeit von diesen Meßsignalen, dadurch gekennzeichnet, daß die ersten und zweiten Spiegel (30, 32) symmetrisch zur ersten Achse (Y) in Ebenen angeordnet sind, die sich in einem Punkt auf der ersten Achse (Y) schneiden, und daß der Regeleinrichtung (96) für die Bewegung ($\varDelta Y$) längs der ersten Achse (Y) ein der Summe der beiden Meßsignale proportionales Eingangssignal und der Regeleinrichtung (94) für die Bewegung ($\varDelta X$) längs der zweiten Achse (X) ein der Differenz der beiden Meßsignale proportionales Eingangssignal zugeführt ist.

2. Werktisch nach Anspruch 1, dadurch gekennzeichnet, daß die ersten und zweiten Spiegel (30, 32) in zueinander orthogonalen Ebenen angeordnet sind.

3. Werktisch nach Anspruch 1 oder 2, dadurch gekennzeichnet, daß erste und zweite stationäre Spiegel (36, 38) ortsfest und parallel zu den ersten und zweiten beweglichen Spiegeln (30, 32) angeordnet sind und daß das erste Interferometer-Meßsystem (40) ein für die Bewegung des ersten beweglichen Spiegels (30) längs des ersten Meßweges ($\varDelta L_1$) relativ zum ersten stationären Spiegel (36) repräsentatives Meßsignal ($\pm2\,\varDelta f_{L_1}$) und das zweite Interferometer-Meßsystem (42) ein für die Bewegung des zweiten beweglichen Spiegels (32) längs des zweiten Meßweges ($\varDelta L_2$) relativ zum zweiten stationären Spiegel (38) repräsentatives Meßsignal ($\pm2\,\varDelta f_{L_2}$) erzeugen.

4. Werktisch nach einem der Ansprüche 1 bis 3, dadurch gekennzeichnet, daß die ersten und zweiten Meßsignale ($\pm2\,\varDelta f_{L_1}$, $\pm2\,\varDelta f_{L_2}$) proportional zu den Geschwindigkeiten der ersten und zweiten bewegbaren Spiegel (30, 32) längs der ersten bzw. zweiten Meßwege ($\varDelta L_1$, $\varDelta L_2$) bei Bewegung der Plattform (20) längs der ersten bzw. zweiten Achse (Y oder X in Fig. 1) des Werktisches sind, und daß die ersten und zweiten Regeleinrichtungen erste und zweite Positionsregelschaltkreise (96, 94) aufweisen, welche die Summe und die Differenz der ersten und zweiten Meßsignale über der Zeit zur Erzeugung erster und zweiter IST-Positionssignale ($\varDelta Y$, $\varDelta X$) integrieren, die proportional der Summe bzw. der Differenz der Verschiebungen der ersten und zweiten bewegbaren Spiegel längs der ersten bzw. zweiten Meßwege sind und bewirken, daß die Plattform längs der orthogonalen Achsen entsprechend den Differenzen zwischen den ersten und zweiten IST-Positionssignalen und ersten bzw. zweiten SOLL-Positionssignalen bewegt wird.

5. Werktisch nach einem der Ansprüche 1 bis 4, dadurch gekennzeichnet, daß eine erste Verknüpfungseinrichtung (88) vorgesehen ist, welche ein für die Summe der beiden Meßsignale repräsentatives Signal an den ersten Positionsregelschaltkreis (96) abgibt, und daß eine zweite Verknüpfungseinrichtung (90) vorgesehen ist, welche ein für die Differenz der beiden Meßsignale repräsentatives Signal an den zweiten Positionsregelschaltkreis (94) abgibt.

6. Werktisch nach Anspruch 5, dadurch gekennzeichnet, daß die Plattform eine erste, längs der ersten Achse (Y) bewegliche Plattform (20) und eine mit der ersten Plattform (20) zur gemeinsamen Bewegung gekoppelte, längs der zweiten Achse (X) auf dem Werktisch bewegliche zweite Plattform (16) umfaßt, daß die erste Positionsregelschaltung (96) einen ersten Zähler (98) enthält, der mit der ersten Verknüpfungseinrichtung (88) verbunden ist und die Summe der ersten und zweiten Meßsignale ($\pm2\,\varDelta f_{L_1}$ und $\pm2\,\varDelta f_{L_2}$) über der Zeit integriert und ein erstes IST-Positionssignal ($\varDelta Y$) erzeugt, welches proportional der Summe der Verschiebungen der ersten und zweiten bewegbaren Spiegel (30 und 32) längs der ersten bzw. zweiten Meßwege ($\varDelta L_1$ und $\varDelta L_2$) ist, daß ein erstes Register (102) ein erstes SOLL-Positionssignal (Y in Fig. 3 oder 4) aufnimmt, daß ein erster Komparator (100) mit dem ersten Zähler und dem ersten Register verbunden ist und ein erstes Vergleichssignal entsprechend der Differenz zwischen dem ersten IST-Positionssignal und dem ersten SOLL-Positionssignal abgibt, daß ein erster Antrieb (104, 106, 108, 110, 112) mit dem ersten Komparator und der ersten Plattform (20) verbunden ist, um die erste Plattform längs der ersten Achse (Y in Fig. 1) zu einer durch das erste SOLL-Positionssignal bezeichneten Position zu verlagern, daß die zweite Positionsregelschaltung (94) einen zweiten Zähler (98') aufweist, der mit der zweiten Verknüpfungseinrichtung verbunden ist und die Differenz der ersten und zweiten Meßsignale über der Zeit zur Abgabe eines zweiten IST-Positionssignals ($\Delta$X) integriert, welches proportional der Differenz der Verschiebungen der ersten bzw. zweiten bewegbaren Spiegel längs der ersten bzw. zweiten Meßwege ist, daß ein zweites Register (102') ein zweites SOLL-Positionssignal (X in Fig. 3 oder 4) aufnimmt, daß ein zweiter Komparator (100') mit dem zweiten Zähler und dem zweiten Register verbunden ist und ein zweites Vergleichssignal entsprechend der Differenz zwischen dem zweiten IST-Positionssignal und dem zweiten SOLL-Positionssignal erzeugt, und daß ein zweiter Antrieb (104'. 106', 108', 110' und 112') mit dem zweiten Komparator und der zweiten Plattform (16) verbunden ist, um die erste Plattform längs der zweiten Achse zu einer durch das zweite SOLL-Positionssignal bezeichneten Position zu verlagern.

7. Werktisch nach Anspruch 6, dadurch gekennzeichnet, daß der erste Antrieb einen ersten Motor (112) aufweist, der mit der ersten Plattform (20) gekoppelt ist, daß eine erste Summierschaltung (106) auf den ersten Komparator (100) und eine Quelle (108) eines Signales anspricht, welches auf die Geschwindigkeit des ersten Motors bezogen ist, um ein der Differenz zwischen dem Sollwertsignal und dem Geschwindigkeitssignal des ersten Motors entsprechendes Signal abzugeben, daß eine erste Servovorrichtung (110) mit der ersten Summierschaltung und dem ersten Motor gekoppelt ist und den ersten Motor derart betätigt, daß er die erste Plattform längs der ersten Achse in die durch das erste SOLL-Positionssignal (Y in Fig. 3 oder 4) vorgegebene Position bewegt, daß der zweite Antrieb einen zweiten Motor (112') umfaßt, der mit der zweiten Plattform (16) gekoppelt ist und die erste Plattform längs der zweiten Achse (X in Fig. 1) bewegt, daß eine zweite Summierschaltung (106') auf den zweiten Komparator (100') und eine Quelle (108') eines Signales anspricht, welches auf die Geschwindigkeit des zweiten Motors bezogen ist, um ein der Differenz zwischen dem Sollwertsignal und dem Geschwindigkeitssignal des zweiten Motors entsprechendes Signal abzugeben, und daß eine zweite Servovorrichtung (110') mit der zweiten Summierschaltung und dem zweiten Motor gekoppelt ist und den zweiten Motor derart betätigt, daß er die erste Plattform längs der zweiten Achse in die durch das zweite Sollwert-Positionsregelsignal (X in Fig. 3 oder 4) vorgegebene Position bewegt.

8. Werktisch nach einem der Ansprüche 1 bis 7, dadurch gekennzeichnet, daß die Bewegung der Plattform (20) in Richtung der ersten und der zweiten Achsen (Y, X) den Beziehungen

$$\Delta Y = 1/2 \sin \theta (\Delta L_1 + \Delta L_2)$$
$$\Delta X = 1/2 \cos \theta (\Delta L_1 - \Delta L_2),$$

genügt, worin $\Delta$Y und $\Delta$X die Verlagerungen der Plattform längs der ersten Achse Y und der zweiten Achse X, $\theta$ der halbe Winkel zwischen den ersten und zweiten Meßwegen und $\Delta L_1$ und $\Delta L_2$ die Verlagerungen jeweils längs dieser Meßwege sind.

9. Verfahren zum Verlagern einer in ersten und zweiten orthogonalen Achsen beweglichen Plattform, wobei erste und zweite Spiegel auf der Plattform mit dieser beweglich angeordnet sind, erste und zweite Interferometer-Meßsysteme vorgesehen sind, welche für die Bewegung der ersten und zweiten Spiegel längs erster und zweiter Meßwege rechtwinklig zu den ersten bzw. zweiten Spiegeln repräsentative erste und zweite Meßsignale erzeugen, und die Plattform längs der orthogonalen ersten und zweiten Achsen in Abhängigkeit von diesen Meßsignalen geregelt bewegt wird, dadurch gekennzeichnet, daß die ersten und zweiten Spiegel symmetrisch zur ersten Achse in Ebenen angeordnet sind, die sich in einem Punkt auf der ersten Achse schneiden und daß die Plattform längs der ersten Achse um einen zur Summe der beiden Meßsignale proportionalen beiden Meßsignale proportionalen Meßweg verlagert wird.

10. Verfahren nach Anspruch 9, dadurch gekennzeichnet, daß die Plattform längs der beiden Achsen gemäß den folgenden Beziehungen verlagert wird:

$$\Delta Y = 1/2 \sin \theta (\Delta L_1 + \Delta L_2)$$
$$\Delta X = 1/2 \cos \theta (\Delta L_1 - \Delta L_2)$$

worin $\Delta$Y und $\Delta$X die Verlagerungen der Plattform längs der ersten Achse Y und der zweiten Achse X, $\theta$ der halbe Winkel zwischen den beiden Meßwegen und $\Delta L_1$ und $\Delta L_2$ die Verlagerungen jeweils längs dieser Meßwege sind.

**Claims**

1. A stage (10) comprising a platform (20) movable along first and second orthogonal axes (Y, X), first and second mirrors (30, 32) arranged on the platform (20) to be movable therewith, first and second interferometric system (40, 42) for generating first and second measuring signals ($\pm 2 \Delta f_{L_1}$, $\pm 2 \Delta f_{L_2}$) representative of movement of the first and second mirrors (30, 32) along first and second measuring paths ($\Delta L_1$, $\Delta L_2$) orthogonal to the first and second mirrors, and first and second control devices (96, 94) for controlling the movements of the platform (20) along said first and second orthogonal axes (Y, X) in response to the measuring signals, characterized in that the first and second mirrors (30, 32) are symmetrically arranged with respect to the first axis (Y) in planes which meet at a point on the first axis (Y) and that an input signal propotional to the sum of the two measuring signals is fed to the control device (96) for controlling the movement ($\Delta$Y) along the first axis (Y) and that an input signal proportional to the difference of the two measuring signals is fed to the control device (94) for controlling the movement ($\Delta X$) along the second axis (X).

2. The stage according to claim 1, characterized in that the first and second mirror (30, 32) are arranged in orthogonal planes.

3. A stage as in claim 1 or 2, characterized in that first and second stationary mirror (36, 38) are fixedly mounted and disposed parallel to the first an second movable mirror (30, 32), respectively and that said first interferometer system (40) produces a first measurement signal ($\pm 2 \Delta f_{L_1}$) indicative of the movement of the first movable mirror (30) along the first measurement path (L$_1$) relative to the first stationary mirror (36), and said second interferometer system (42) produces a second measurement signal ($\pm 2 \Delta f_{L_2}$) indicative of the movement of the second movable mirror (32) along the second measurement path ($\Delta L_2$) relative to the second stationary mirror (38).

4. A stage as in one of claims 1 to 3, characterized in that said first and second measurement signals ($\pm 2 \Delta f_{L_1}$, $\pm 2 \Delta f_{L_2}$) are proportional to the velocities of the first and second movable mirrors (30, 32) along the first and second measurement paths ($\Delta L_1$, $\Delta L_2$), respectively, while the platform (20) is being moved along either the first of the second axis (Y or X in Fig. 1) of the stage, and said first and second control devices comprise first and second position control circuits (96, 94), which integrate the sum and the difference of the first and second measurement signals with respect to time to produce first and second actual position signals ($\Delta Y$, $\Delta X$) proportional to the sum and the difference, respectively, of the displacements of the first and second movable mirror along the first and second measurement paths, respectively, and move the platform along said one and said other of the axes as determined by the differences between those first and second actual position signals and first and second desired position signals, respectively.

5. A stage as in one of claims 1 to 4, characterized in that a first combining means (88) for applying a signal representative of the sum of the first and second measurement signals to the first position control circuit (96) is provided, and in that a second combining means (90) for applying a signal representative of the difference of the first second measurement signals to the second position control circuit (94) is provided.

6. A stage as claimed in claim 5, characterized in that the platform comprises a first platform (20) movable along said one (Y) of the axes and a second platform (16) movable on said stage along said other (X) of the axes, said first platform (20) being coupled to the second platform (16) for movement therewith along said other (X) of the axes, that said first position control circuit (96) comprises first counter means (98), coupled to the first combining means (88), for integrating the sum of the first and second measurement signals ($\pm 2 \Delta f_{L_1}$ and $\pm 2 \Delta f_{L_2}$) with respect to time to produce a first actual position signal ($\Delta Y$) proportional to the sum of the displacements of the first and second movable mirrors (30 and 32) along the first and second measurement paths ($\Delta L_1$ and $\Delta L_2$), respectively, first register means (102) for receiving a first desired position signal (Y in Fig. 3 and 4), first comparator means (100) coupled to the first counter means and to the first register means, for producing a first comparison signal equal to the difference between the first actual and desired position signals, and first drive means (104, 106, 108, 110, 112), coupled to the first comparator means and to the first platform (20), for moving the first platform along said one (Y in Fig. 1) of the axes to a position designated by the first desired position signal, that said second position control circuit (94) comprises second counter means (98'), coupled to the second combining means, for integrating the difference of the first and second measurement signals with respect to time to produce a second actual position signal ($\Delta X$) proportional to the difference of the displacements of the first and second movable mirrors along the first and second measurement paths, respectively, that second register means (102') for receiving a second desired position signal (X in Fig. 3 and 4), second comparator means (100'), coupled to the second center means and to the second register means, for producing a second comparison signal equal to the difference between the second actual and desired position signals, and second drive means (104', 106', 108', 110', 112'), coupled to the second comparator means and to the second platform (16), for moving the first platform along said other of the axes to a position designated by the second desired position signal.

7. A stage as in claim 6, characterized in that said first drive means comprises a first motor (112), coupled to the first platform (20), that a first summing circuit (106) is responsive to the first comparator means (100) and to a source (108) of signal related to the speed of the first motor, for producing a signal related to the difference between a desired signal and the signal related to the speed of the first motor, that a first servo drive circuit (110) is coupled to the first summing circuit and to the first motor, for driving the first motor to move the first platform along said one of the axes to the position designated by the first desired position signal (Y in Fig. 3 and 4), that said second drive means comprises a second motor (112'), coupled to the second platform (16) and moving the first platform along said other (X in Fig. 1) of the axes, that a second summing circuit (106') is responsive to the second comparator means (100') and to a source (108') of signal related to the speed of the second motor, for producing a signal related to the difference between a desired signal and the signal related to the speed of the second motor, and that a second servo drive circuit (110') is coupled to the second summing circuit and to the second motor and drives the second motor to move the first platform along said other of the axes to the position designated by the second desired position control signal (X in Fig. 3 and 4).

8. A stage as in any of claims 1 to 7, characterized in that the movement of the platform (20) along said one and said other of the axes (Y, X) is controlled in accordance with the following equations:

(1) $\varDelta Y = \frac{1}{2}\sin\theta(\varDelta L_1 + \varDelta L_2)$, and

(2) $\varDelta X = \frac{1}{2}\cos\theta(\varDelta L_1 - \varDelta L_2)$,

in which $\varDelta Y$ and $\varDelta X$ represent displacement of the platform along said one axis Y and said other axis X, $\theta$ represents onehalf the angle between the first and second measurement paths, $\varDelta L_1$ and $\varDelta L_2$ represent displacements along said measurement paths, respectively.

9. A method of constraining a movable platform to move along two orthogonal axes, in which first and second mirrors are arranged on the platform to be movable therewith and first and second interferomatic systems for generating first and second measuring signals representative of movement of the first and second mirrors along first and second measuring paths orthogonal to the first and second mirrors are provided and in which the platform may be moved along said first and second orthogonal axes in response to the measuring signals in a controlled manner, characterized in that the first and second mirrors are symmetrically arranged with respect to the first axis in planes which meet at a point on the first axis and that the platform is moved along the first axis for a distance proportional to the sum of the two measuring signals and along the second axis for a distance proportional to the difference of the two measuring signals.

10. A method as in claim 9, characterized in that the platform is displaced along said one and said other of the axes in accordance with the following equations:

(1) $\varDelta Y = \frac{1}{2}\sin\theta(\varDelta L_1 + \varDelta L_2)$, and

(2) $\varDelta X = \frac{1}{2}\cos\theta(\varDelta L_1 - \varDelta L_2)$,

in which $\varDelta Y$ and $\varDelta X$ represent displacements of the platform along said one axis Y and said other axis X, $\theta$ represents one half the angle between the first and second measurement paths and $\varDelta L_1$ and $\varDelta L_2$ represent displacements along said measurement paths, respectively.

**Revendications**

1. Table de travail (10) comportant une plate-forme (20) déplaçable selon des premier et second axes orthogonaux (X, Y), un premier et un second miroir (30, 32) étant disposés sur la plate-forme (20) de façon à se déplacer avec celle-ci, un premier et un second système de mesure interférométrique (40, 42) étant prévus pour produire un premier et un second signal de mesure ($\pm 2\varDelta f_{L_1}$, $\pm 2\varDelta f_{L_2}$) pour représenter le mouvement du premier et du second miroir (30, 32) le long d'une première et d'une seconde voie de mesure ($\varDelta L_1$, $\varDelta L_2$) perpendiculairement au premier et au second miroir, et avec un premier et un second dispositif de réglage (96, 94) pour la régulation des mouvements de la plate-forme (20) le long des premier et second axes orthogonaux (X, Y) en fonction de ces signaux de mesure, caractérisée en ce que les premier et second miroirs (30, 32) sont disposés symétriquement par rapport au premier axe (Y) dans des plans qui se coupent en un point sur le premier axe (Y), et en ce que le dispositif de réglage (96) du mouvement ($\varDelta Y$) le long du premier axe (Y) reçoit un signal d'entrée proportionnel à la somme des deux signaux de mesure et le dispositif de réglage (94) du mouvement ($\varDelta X$) le long du second axe (X) reçoit un signal d'entrée proportionnel à la différence des deux signaux de mesure.

2. Table de travail selon la revendication 1, caractérisée en ce que le premier et le second miroir (30, 32) sont disposés dans des plans mutuellement orthogonaux.

3. Table de travail selon la revendication 1 ou 2, caractérisée en ce que des premier et second miroirs stationnaires (36, 38) sont disposés dans des positions fixes et parallèlement aux premier et second miroirs mobiles (30, 32) et en ce que le premier système de mesure interférométrique (40) produit un signal des mesure ($\pm 2\varDelta f_{L_1}$) représentant le mouvement du premier miroir mobile (30) le long de la première voie de mesure ($\varDelta L_1$) par rapport au premier miroir stationnaire (36) et le second système de mesure interférométrique (42) produit un signal de musure ($\pm 2\varDelta f_{L_2}$) représentant le mouvement du second miroir mobile (32) le long de la seconde voie de mesure ($\varDelta L_2$) par rapport au second miroir stationnaire (38).

4. Table de travail selon une des revendications 1 à 3, caractérisée en ce que les premier et second signaux de mesure ($\pm 2\varDelta f_{L_1}$, $\pm 2\varDelta f_{L_2}$) sont proportionnels aux vitesses des premier et second miroirs mobiles (30, 32) le long de la première ou de la seconde voie de mesure ($\varDelta L_1$, $\varDelta L_2$) lors d'un mouvement de la plate-forme (20) le long du premier ou du second axe (Y ou X sur la figure 1) de la table de travail, et en ce que les premier et second dispositifs de réglage comportent des premier et second circuits de commande de réglage de position (96, 94), qui intègrent la somme et la différence des premier et second signaux de mesure en fonction du temps pour produire des premier et second signaux de position réelle ($\varDelta Y$, $\varDelta X$), qui sont proportionnels à la somme ou à la différence des déplacements du premier et du second miroir mobile le long de la première ou de la seconde voie de mesure et qui font en sorte que la plate-forme soit déplacée le long des axes orthogonaux en correspondance aux différences entre les premier et second signaux de position réelle et des premier ou second signaux de position de consigne.

5. Table de travail selon une des revendications 1 à 4, caractérisée en ce qu'il est prévu un premier dispositif de combinaison (88), qui applique un signal représentant la somme des deux signaux de mesure au premier circuit de commande de réglage de position (96) et en ce qu'il est prévu un second dispositif de combinaison (90) qui applique un signal représentant la différence des deux signaux de mesure au second circuit de commande de réglage de position (94).

6. Table de travail selon la revendication 5, caractérisée en ce que la plate-forme comporte une première plate-forme (20) mobile le long du premier axe (Y) et une seconde plate-forme (16), accouplée à la première plate-forme (20) pour un mouvement à l'unisson et déplaçable sur la table de travail le long du second axe (X), en ce que le premier circuit de réglage de position (96) contient un premier compteur (98) qui est relié au premier dispositif de combinaison (88), qui intègre en fonction du temps la somme des premier et second signaux de mesure ($\pm 2\, \Delta f_{L_1}$ et $\pm 2\, \Delta f_{L_2}$) et qui produit un premier signal de position réelle ($\Delta Y$), qui est proportionnel à la somme des déplacements des premier et second miroirs mobiles (30 et 32) le long de la première ou de la seconde voie de mesure ($\Delta L_1$ et $\Delta L_2$), en ce qu'un premier registre (102) reçoit un premier signal de position de consigne (Y sur la figure 3 ou 4), en ce qu'un premier comparateur (100) est relié au premier compteur et au premier registre et produit un premier signal de comparaison correspondant à la différence entre le premier signal de position réelle et le premier signal de position de consigne, en ce qu'un premier entraînement (104, 106, 108, 110, 112) est relié au premier comparateur et à la première plate-forme (20) de façon à amener la première plate-forme le long du premier axe (Y sur la figure 1) dans une position définie par le premier signal de position de consigne, en ce que ce second circuit de réglage de position (94) comporte un second compteur (98'), qui est relié au second dispositif de combinaison et qui intègre en fonction du temps la différence des premier et second signaux de mesure pour produire un second signal de position réelle ($\Delta X$) qui est proportionnel à la différence des déplacements des premier et second miroirs mobiles le long de la première ou de la seconde voie de mesure, en ce qu'un second registre (102') reçoit un second signal de position de consigne (X sur la figure 3 ou 4), en ce qu'un second comparateur (100') est relié au second compteur et au second registre et produit un second signal de comparaison correspondant à la différence entre le second signal de position réelle et le second signal de position de consigne, et en ce qu'un second entraînement (104', 106', 108', 110' et 112') est relié au second comparateur et à la seconde plate forme (16) pour amener la première plate-forme le long du second axe dans une position définie par le second signal de position de consigne.

7. Table de travail selon la revendication 6, caractérisée en ce que le premier entraînement comporte un premier moteur (112) qui est accouplé à la première plate-forme (20), en ce qu'un premier circuit de sommation (106) réagit au premier comparateur (100) et à une source (108) d'un signal qui est en relation avec la vitesse du premier moteur afin de produire un signal correspondant à la différence entre le signal de valeur de consigne et le signal de vitesse du premier moteur, en ce qu'un premier servo-dispositif (110) est relié au premier circuit de sommation et au premier moteur et actionne le premier moteur de telle sorte qu'il déplace la première plate-forme le long du premier axe jusque dans la position prédéterminée par le premier signal de position de consigne (Y sur la figure 3 ou 4), en ce que le second entraînement comporte un second moteur (112') qui est accouplé à la seconde plate-forme (16) et qui déplace la première plate-forme le long du second axe (X sur la figure 1), en ce qu'un second circuit de sommation (106') réagit au second comparateur (100') et à une source (108') d'un signal qui est en relation avec la vitesse du second moteur afin de produire un signal correspondant à la différence entre le signal de valeur de consigne et le signal de vitesse du second moteur, et en ce qu'un second servo-dispositif (110') est relié au second circuit de sommation et au second moteur et actionne le second moteur de telle sorte qu'il déplace la première plate-forme le long du second axe jusque dans la position prédéterminé par le second signal de réglage de position de consigne (X sur la figure 3 ou 4).

8. Table de travail selon une des revendications 1 à 7, caractérisée en ce que le mouvement de la plate-forme (20) dans la direction du premier et du second axe (Y, X) satisfait aux relations:

$$\Delta Y = 1/2 \sin \theta (\Delta L_1 + \Delta L_2)$$
$$\Delta X = 1/2 \cos \theta (\Delta L_1 - \Delta L_2),$$

où $\Delta Y$ et $\Delta X$ représentent les déplacements de la plate-forme le long du premier axe Y et du second axe X, $\theta$ représente le demi-angle entre la première et la seconde voie de mesure et $\Delta L_1$ et $\Delta L_2$ représentent les déplacements respectifs le long de ces voies de mesure.

9. Procédé de commande de déplacement d'une plate-forme mobile selon des premier et second axes orthogonaux, un premier et un second miroir étant disposés sur la plate-forme de façon à se déplacer avec elle, un premier et un second système de mesure interférométrique étant prévus de façon à produire des premier et second signaux de mesure représentant le mouvement des premier et second miroirs le long d'une première et d'une seconde voie de mesure perpendiculairement aux premier et second miroirs, et la plate-forme étant déplacée le long des premier et second axes orthogonaux avec régulation en fonction de ces signaux de mesure, caractérisé en ce que les premier et second miroirs sont disposés symétriquement par rapport au premier axe dans des plans qui se coupent en un point situé sur le premier axe et en ce que la plate-forme est déplacée le long du premier axe d'une distance de mesure proportionelle à la somme des deux signaux de mesure et le long du second axe d'une distance de mesure proportionelle à la différence des deux signaux de mesure.

10. Procédé selon la revendication 9, caractérisée en ce que la plate-forme est déplacée le long des deux axes en accord avec les relations suivantes:

$$\Delta Y = 1/2 \sin \theta \, (\Delta L_1 + \Delta L_2)$$
$$\Delta X = 1/2 \cos \theta \, (\Delta L_1 - \Delta L_2),$$

où $\Delta Y$ et $\Delta X$ représentent les déplacements de la plate-forme le long du premier axe Y et du second axe X, $\theta$ représente le demi-angle entre les deux voies de mesure et $\Delta L_1$ et $\Delta L_2$ représentent les déplacements le long des voies de mesure respectives.

FIG 1

FIG    2

FIG 3

Rechner

92

y-Achse

x-Achse

Tacho 108

y Motor 112

x Motor 112'

Tacho 108'

Register 102

Register 103

Register 103'

Register 102'

Y Kompa-rator

x Kompa-rator

Zähler 98

Zähler 98'

ΔY

Δx

100

100'

D/A-Um-setzer 104

D/A-Um-setzer 104'

Servo-antrieb 110

Servo-antrieb 110'

Wähl-schaltung 109

Wähl-schaltung 109'

Phasen-regel-schaltung 114

Phasen-regel-schaltung 114'

116

116'

106

106'

Addier-schaltung 88'

Addier-schaltung 90'

96

94

95

Ausgangs-mischer 82

Ausgangs-mischer 84

$f_1 - f_2$

$f_1 - f_2 \pm 2\Delta f_{L_1}$

$f_1 - f_2$

$f_1 - f_2 \pm 2\Delta f_{L_1}$

$f_1 - f_2$

$f_1 - f_2 \pm 2\Delta f_{L_2}$

$f_1 - f_2$

$f_1 - f_2 \pm 2\Delta f_{L_2}$

FIG.4

FIG.5